# EUROPEAN PATENT APPLICATION

(11) **EP 4 575 941 A1**
(43) Date of publication of application: **25.06.2025**
(21) Application number: 23219419.1
(22) Date of filing: 21.12.2023
(51) Int. Cl.: G06Q 10/04, G05B 23/02

(54) **METHOD FOR PREDICTING MOULD GROWTH AND FOR DETERMINING ITS CAUSE**

(71) Applicant: Zurich Insurance Company Ltd., Fareham, Whiteley PO15 7JZ (GB)
(72) Inventor: DAVIS, Jonathan, Fareham PO15 6DG (GB); LEE, Hannah, Netley SO31 5BL (GB)
(74) Representative: Hepp Wenger Ryffel AG

(57) **Abstract**

The present invention relates to the technical field of building maintenance. It relates in particular to a computer-implemented method for predicting mould growth in an enclosed space. It also relates to a computer-implemented method for determining at least one cause of mould growth in an enclosed space. It further relates to a data processing system, a computer program and a computer-readable medium.

## Description

The present invention relates to the technical field of building maintenance. It relates in particular to a computer-implemented method for predicting mould growth in an enclosed space. It also relates to a computer-implemented method for determining at least one cause of mould growth in an enclosed space. It further relates to a data processing system, a computer program and a computer-readable medium.

Mould growth in indoor environments is a significant concern due to its potential impact on health and property. Moulds are fungi that thrive in moist conditions and can spread rapidly by producing spores that travel through the air. When they settle on surfaces, they can cause material degradation, leading to structural damage in buildings. This not only undermines the integrity of construction materials but can also result in costly repairs.

From a health perspective, mould exposure is linked to a variety of respiratory issues, such as allergies, asthma, and other breathing problems. Particularly for individuals with weakened immune systems, the presence of mould can pose a serious health risk. Moreover, mould can produce mycotoxins, which are toxic substances that can lead to more severe health conditions upon prolonged exposure. The musty odour associated with mould can also create an unpleasant living or working environment, which can affect the quality of life and productivity. Therefore, controlling moisture and preventing mould growth is crucial in maintaining a safe and healthy indoor environment.

It is particularly important to prevent mould growth in the first place, rather than trying to combat existing mould infestation. Should mould nevertheless develop, it is important that the cause of the mould growth is identified in order to prevent future mould growth.

Mould growth is influenced by several key environmental factors, with moisture being the most critical. High humidity levels, water leaks, condensation, and poor ventilation create the perfect breeding ground for mould spores to settle and proliferate. Temperature is another significant factor; mould typically thrives in warmer conditions, making heated buildings in cooler climates susceptible to infestations. Organic materials, such as wood, paper, carpet, and food, provide the necessary nutrients for mould to grow. Additionally, stagnant air contributes to mould growth, as it allows pockets of moist air to remain in contact with surfaces for extended periods. Light, or the lack thereof, can also play a role; while some moulds require darkness to grow, others may proliferate in lighted conditions. Finally, the time that materials remain wet is crucial; if drying occurs quickly, mould may not have the opportunity to develop. Effective mould control, therefore, hinges on managing these factors to create an environment that is less conducive to its growth.

Different combinations of conditions must therefore prevail over a certain period of time in order to cause mould growth. In order to be able to predict future mould growth with sufficient accuracy, it is therefore not enough to simply read the current temperature and relative humidity and make a prediction for future mould growth. The current measurement data is just as meaningless when it comes to making a statement about the cause of mould.

The prior art features methods and systems that analyse time series data on air and/or wall temperature as well as air and/or wall humidity and thus provide information on mould growth. However, the inventors have found that the methods and systems of the prior art cannot be used to make sufficiently accurate predictions about mould growth or to determine its cause(s), as outlined in the following paragraphs.

WO 21233957 A1 (AMBISENSE LTD, 25 November 2021) discloses and air quality monitoring system. Using measurement data of the relative humidity at the surface of the wall and the relative air humidity as well as the wall temperature and the air temperature, it determines the likelihood of microbial growth and the likelihood that the wall moisture is caused by condensation. The method also takes into account contextual data from other sources such as local weather, occupancy, and heating. The inventors of the present application have found that in methods similar to the method in WO 21233957 A1 (AMBISENSE LTD, 25 November 2021), the result of the analysis as to whether mould growth is present in the home now or in the near future depends very much on where the sensors are placed. If the sensors are placed in a specific location, this can lead to very different results than if the sensors are placed in a completely different location. This fact indicates that the accuracy of predictions is very low with such an approach.

A mould warning device to predict the risk of mould growth is described in DE 102014107690 A1 (SENSORIT GMBH, 3 December 2015). It uses the Glaser procedure to calculate a value for wall humidity. The Glaser procedure is a method used in the construction industry to assess the risk of interstitial condensation in building components (e.g. moisture inside walls or roofs), which is a cause of mould growth. The method then compares the calculated value for wall humidity with a measured value. If the values are different from each other, there is an indication that the wall humidity is not due to the room climate, but due to, e.g., a wall leak. If the water activity value, which indicates the free moisture in a building substance, remains above a certain threshold for a certain period of time, the method outputs a warning for potential future mould growth. The inventors of the present application have found that, firstly, the Glaser procedure only focuses on one of many causes for mould growth (interstitial condensation in building components). The method presented here does not take into account the various other potential sources of mould, which is crucial for an accurate prediction of future mould growth and/or the determination of (a) cause(s) of mould growth. Secondly, the inventors of the present application have found that warnings based on thresholds alone usually come too late, as the mould growth has likely already started by this point. Thirdly, warnings based on thresholds alone tend to produce many false positive warnings, which leads to alert fatigue and renders the system untrustworthy.

Similar disadvantages are also recognisable in US 200623482 A1 (IAQ LABORATORIES INTL, 19 October 2006), which discloses a method for predicting mould growth from a temperature and humidity reading of the environment. The predictions are mostly based on whether certain values exceed a threshold for a period of time. Here, too, one can probably speak less of a prediction of mould growth than of an indication that mould growth is already occurring.

Another model frequently used to predict mould growth is the VTT model (VTT stands for the Technical Research Centre of Finland that developed the model), which is described by MENNEER, T. et al. (Modelling mould growth in domestic environments using relative humidity and temperature. Build. Environ. January 2022, Vol. 208, 108583), for example. Although the model could potentially be useful for providing a rough estimate of possible existing conditions for mould growth, it is only of limited practical use. The model requires accurate and detailed input data, which is sometimes difficult to obtain. The model also does not fully take into account the dynamic and fluctuating nature of indoor environments, where temperature and humidity can change rapidly and frequently.

It is therefore an object of the present invention to overcome at least some, if not all shortcomings of the prior art methods. In particular, it is an object of the invention to provide an improved method that allows to prevent (or at least reduce the risk of) mould growth in future.

The problem is solved by a computer-implemented method for predicting mould growth in an enclosed space, preferably a room of a building; by a computer-implemented method for determining at least one cause of mould growth in an enclosed space, preferably in a room of a building, with visible mould infestation; by a data processing system; by a computer program; and by a computer-readable medium according to the independent claims. Advantageous embodiments and further developments are the subject of the dependent claims.

A first aspect of the invention relates to a computer-implemented method for predicting mould growth in an enclosed space. The enclosed space is preferably a room of a building. The method comprises the following steps. The content of the individual steps is explained in more detail in the paragraphs following the last step.
a) Receiving an input dataset, which comprises time-series sensor data points of the air temperature and the relative air humidity of the enclosed space, preferably the room of the building.
b) Extracting a first set of data features from the input dataset. Each data feature is of any of the following data feature types:
   i. the cross-correlation value between the air temperature and the relative air humidity at a specific time offset of a time period;
   ii. the maximum cross-correlation value from a multitude of cross-correlation values between the air temperature and the relative air humidity of a time period, wherein each cross-correlation value in the multitude corresponds to a different time offset;
   iii. the maximum cross-correlation value from a multitude of cross-correlation values between the air temperature and the relative air humidity at a specific time offset of a time period, wherein each cross-correlation value in the multitude corresponds to a different period of the day;
   iv. the minimum cross-correlation value from a multitude of cross-correlation values between the air temperature and the relative air humidity at a specific time offset of a time period, wherein each cross-correlation value in the multitude corresponds to a different period of the day; and
   v. the time length with a negative cross-correlation value below a predefined negative cross-correlation threshold between the air temperature and the relative air humidity at a specific time offset within a time period.
c) Extracting a second set of data features from the input dataset. Each data feature is of any of the following data feature types:
   i. the total time length during which the relative air humidity is above a predefined relative air humidity threshold within a time period;
   ii. the longest time length during which the relative air humidity is above a predefined relative air humidity threshold within a time period;
   iii. the average relative air humidity during a particular period of the day within a time period;
   iv. the standard deviation of the average relative air humidity during a particular period of the day within a time period;
   v. the difference between the average relative air humidity during a particular period of the day within a first time period and the average relative air humidity during a particular period of the day within a second time period;
   vi. the average air temperature during a particular period of the day within a time period;
   vii. the standard deviation of the average air temperature during a particular period of the day within a time period;
   viii. the difference between the average air temperature during a particular period of the day within a first time period and the average air temperature during a particular period of the day within a second time period;
   ix. the maximum relative air humidity during a particular period of the day within a time period; and
   x. the minimum air temperature during a particular period of the day within a time period.
d) Performing computational analysis on the first and second set of extracted data features to determine a probability that mould will form to a degree that is visible to the naked eye in the enclosed space, preferably in the room of the building, within a defined time period after the last time-series sensor data point in the input dataset.
e) Producing an output dataset comprising the determined probability.

Where appropriate, the steps can also be carried out in a different order. For example, the extraction of the second set of data features in step c) can be performed before the extraction of the first set of data features in step b) without changing the final result. But of course, step a), for example, must be carried out before the other steps, as otherwise the process would not make sense. This also applies to other methods of this invention.

Mould refers to a variety of fungi that grow in the form of multicellular filaments called hyphae. They are commonly found in damp, warm, and humid conditions and can spread and reproduce by producing spores that can be airborne.

The method according to the invention preferably allows predictions to be made for the expected growth of the genera of mould selected from the group consisting of: Aspergillus, Cladosporium, Penicillium, Stachybotrys chartarum, Alternaria, Fusarium, Mucor, Trichoderma, Aureobasidium, and Chaetomium. Only one mould genus or several genera can grow at the same time.

Mould growth is considered predicted in the method according to the invention if the computational model indicates a probability that mould will form to a degree that is visible to the naked eye. If the probability is lower, it is less likely that mould will form at a certain point in time if the conditions remain the same as during the measurement period. If the probability is higher, it is more likely that mould growth will occur if no measures are taken to change the temperature and/or humidity conditions.

An enclosed space refers to an area that is completely or partially surrounded by walls, barriers, or structures, creating a distinct separation from other areas. This can include rooms within buildings, such as offices or bedrooms, as well as confined areas like elevators, vehicles, or containers. The defining characteristic of an enclosed space is its limitation on free movement to and from the area, often having restricted entry and exit points, and it may also impact the environmental conditions within, such as air circulation and temperature.

In step a), each time-series sensor data point in the input dataset comprises a timestamp and a value for the air temperature and/or a value for the relative air humidity. Thus, not every data point needs both an air temperature value and a relative air humidity value.

The input dataset is received from one or multiple sensors that is/are placed in the enclosed space, preferably the room of the building. The data can be transmitted from the sensor(s) via wireless or wired data connections known to the person skilled in the art.

It has been shown that the sensors used can be placed in many different locations in the room without negatively influencing the prediction result. Of course, the sensors should not be placed directly at the window, near an exhaust fan or on top of a radiator, for example. Preferably, the data for the input dataset is measured with sensors which are placed at least one meter away from, preferably at least two meters away from
- a heat source, preferably a radiator, a heater, an oven, or a combination thereof;
- a water source, preferably a kettle, a humidifier, or a combination thereof;
- an air conditioning unit;
- a fan;
- an exhaust fan;
- a window; or
- a combination thereof.

In step b), data features are extracted that are in any way related to the cross-correlation between air temperature and relative humidity. In step c), data features are extracted that are not based on the determination of a cross-correlation.

Before the data features are extracted, the input dataset is preferably processed using the data cleaning and preprocessing steps familiar to the skilled person (e.g. interpolation, noise reduction and normalisation).

The skilled person is familiar with methods for determining cross-correlation values. Typically, a time offset (also called lag) or a range of time offsets is selected over which the cross-correlation value(s) is/are calculated. A time offset of - 1 means the second series is shifted one time unit earlier, and a time offset of +1 means it is shifted one time unit later. For example, a time unit of the time offset is 10 min. For each time offset, the two time series are aligned according to the time offset and the cross-correlation value (also called correlation coefficient) for the overlapping values is computed. For example, the cross-correlation value can be calculated using the Pearson product-moment correlation coefficient, which is described by BROCKWELL P. J. and DAVIS R. A. (Time Series: Theory and Methods. New York: Springer Verlag, 1991, Vol. 2, pages 373 to 375 & 405 to 417).

The cross-correlation value ranges from -1 to 1. A cross-correlation value of 1 implies a perfect positive correlation at a specific time offset, meaning that as one variable increases, the other variable increases proportionally. A cross-correlation value of 0 implies no linear correlation between the variables. A cross-correlation value of -1 implies a perfect negative correlation, meaning that as one variable increases, the other variable decreases proportionally.

In data feature type b.i), the cross-correlation value of a specific time offset is taken into consideration. The time offset is preferably -1, 0, or 1 for this data feature type. This allows analysing the cross-correlation at zero lag or almost zero lag.

For this and all subsequent data feature types, the time unit of the time offset is preferably 10 min, 30 min, 60 min, 120 min, or 180 min; most preferably, the time unit of the time offset is 10 min. The values may differ for each data feature type. For this and all subsequent data feature types, preferably, the time period is the entire time period recorded, 30 days before the timestamp of the last data point, or 7 days before the timestamp of the last data point. Also here, the values may differ for each data feature type.

At least one data feature of data feature type b.i) with one of the following sets of parameters is preferably extracted:
- time offset: -1, time period: 30 days;
- time offset: -1, time period: 7 days;
- time offset: 0, time period: 30 days;
- time offset: 0, time period: 7 days;
- time offset: 1, time period: 30 days; and
- time offset: 1, time period: 7 days;
with 10 min as the time unit of the time offset.

In the context of the present invention, the terms "7 days" and "30 days" in relation to the time period mean the period 7 days, or 30 days respectively, before the timestamp of the last data point in the input data set.

Several data features of a data feature type can be used in a single implementation of the method. For example, all the data features of data feature type b.i) mentioned in the previous paragraph can be used in a single implementation.

A time period used in a data feature from the data feature type b.i) does not have to correspond to a time period of a different data feature from the same or a different data feature type. For example, a first data feature can be calculated with a time period of 30 days and a second data feature can be calculated with a time period of 7 days.

It was found that the cross-correlation between relative humidity and air temperature at a particular time offset can give an indication of whether a room, or generally an enclosed space, is well ventilated and whether there is a frequent or constant source of moisture (e.g. laundry on the washing line, or leaks).

The following observations were made when analysing cross-correlation values at low time offsets (i.e. -1 ≤ time offset ≤ 1; time unit of the time offset = 10 min).

The inventors have found that if there is neither a strong positive nor a strong negative cross-correlation between the two parameters (i.e. preferably a cross-correlation value from -0.3 to 0.3, more preferably from -0.2 to 0.2, most preferably from -0.1 to 0.1), it means that there is probably good ventilation and no source of moisture in the corresponding space.

It was further found that a strong positive cross-correlation (i.e. preferably a cross-correlation value of at least 0.3, more preferably at least 0.5, most preferably at least 0.7), is indicative for poor ventilation. It also means that there is probably a source of moisture (e.g. a water leak, poor drainage, flooding, spills, damp materials (e.g. wet laundry), rising damp, or a humidifier). It means that there is a risk of mould growth.

A strong negative cross-correlation (i.e. preferably a cross-correlation value of at most -0.3, more preferably at most -0.5, most preferably at most -0.7) is the result of one of the parameters decreasing while the other parameter is increasing and vice versa. For example, a decrease in air temperature and an increase of relative air humidity. It was found that such a negative cross-correlation is indicative for poor ventilation and that there is a risk for mould growth.

Alternatively, instead of defining threshold values, a strong positive and a strong negative cross-correlation can be statistically defined by comparing the observed cross-correlation values against those expected from white noise, which represents a random signal with no inherent correlation. In this context, "white noise" serves as a benchmark for determining the statistical significance of the observed correlations. A strong positive cross-correlation is then identified when the observed value exceeds the 95th percentile of cross-correlation values that would be expected from white noise. This percentile threshold indicates that the observed correlation is highly unlikely to be a result of random chance, thereby suggesting a meaningful and statistically significant relationship. Similarly, a strong negative cross-correlation can be defined when the observed value is less than the corresponding 5th percentile of white noisebased correlations.

It was found that, especially in combination with other data feature types (see below), the cross-correlation value between the air temperature and the relative air humidity is a strong predictor for future mould growth.

The following data feature types (b.ii) to b.v)) are also based on cross-correlation values and refine the analysis even further.

In the second data feature type (b.ii)), multiple cross-correlation values are calculated, each having a different time offset. From these, the highest cross-correlation value is selected. Preferably, the multitude of cross-correlation values includes every value corresponding to integer time offsets ranging from -10 to 10. Preferably, at least one data feature of data feature type b.ii) with one of the following sets of parameters is extracted:
- time offsets: all integers ranging from -10 to 10; time period: 30 days; and
- time offsets: all integers ranging from -10 to 10; time period: 7 days;
with 10 min as the time unit of the time offset. In each case, the maximum cross-correlation value is selected.

The data feature type b.iii) is used to determine cross-correlation values during different periods of the day (e.g. morning, afternoon and night), potentially over a time period of multiple days. From these, the highest cross-correlation value is selected. The total number of cross-correlation values calculated (from which the maximum value is selected) corresponds to the number of periods of the day times the number of days. For example, for a time period of 7 days, the periods of the day being 08:00 to 20:00 and 20:00 to 08:00 and a time offset of 0, a total of 14 cross-correlation values are calculated for each period of the day of each day. The highest cross-correlation value of the 14 values is then selected.

In the context of the present invention, the 24-hour time format is used to indicate the time of day, wherein 00:00 is midnight and 12:00 is noon; and wherein a colon-separated four-digit time format indicates the hours and minutes (hh:mm) and a colon-separated six-digit format indicates the hours, minutes and seconds (hh:mm:ss). If the first time of a period of the day is higher than the second time, the second time refers to the next day.

Data feature type b.iv) is the same as data feature type b.iii), except that instead of the highest value, the lowest cross-correlation value is selected from the multitude of cross-correlation values.

Preferably, the periods of the day in data feature types b.iii) and b.iv) are 08:00 to 20:00 (daytime) and 20:00 to 08:00 of the next day (nighttime).

Preferably, at least one data feature of data feature type b.iii) with one of the following sets of parameters is extracted:
- periods of the day: 08:00 to 20:00 & 20:00 to 08:00, time period: 7 days, time offset: 0; and
- periods of the day: 08:00 to 20:00 & 20:00 to 08:00, time period: 30 days, time offset: 0;
with 10 min as the time unit of the time offset. In each case, the maximum cross-correlation value is selected.

Preferably, at least one data feature of data feature type b.iv) with one of the following sets of parameters is extracted:
- periods of the day: 08:00 to 20:00 & 20:00 to 08:00, time period: 7 days, time offset: 0; and
- periods of the day: 08:00 to 20:00 & 20:00 to 08:00, time period: 30 days, time offset: 0;
with 10 min as the time unit of the time offset. In each case, the minimum cross-correlation value is selected.

The total time length during which the air temperature and the relative air humidity are inversely related below a certain threshold is measured with data feature type b.v). It indicates how long the air temperature and relative air humidity are negatively correlated during the time period of one day, for example. The time period is split into segments, wherein each segment preferably corresponds to 1 h, 2 h or 3 h, and the cross-correlation value is computed for each segment at a specific time offset (e.g. 0). The time length of the time segments with a cross-correlation below the negative cross-correlation threshold are added together, wherein the negative cross-correlation threshold preferably is -0.2, -0.3, -0.4, -0.5, -0.6, -0.7, - 0.8, or -0.9, more preferably is -0.5, -0.6, -0.7, -0.8, or - 0.9, even more preferably is -0.6, -0.7, or -0.8, most preferably is -0.7.

Preferably, at least one data feature of data feature type b.v) with one of the following sets of parameters is extracted:
- segment length: 1 h, time period: 7 days, time offset: 0, negative cross-correlation threshold: -0.7; and
- segment length: 1 h, time period: 30 days, time offset: 0, negative cross-correlation threshold: -0.7.

As stated above, a strong negative cross-correlation between the air temperature and the relative air humidity is a sign of poor ventilation. This is especially true, if the strong negative cross-correlation persists over prolonged periods of time.

At least one data feature type, preferably at least 3, more preferably at least 4, most preferably all data feature types of step b) are employed each at least once for extracting the first set of data features.

The first data feature type, c.i), for the second set of data features indicates how long the relative air humidity remained above a relative air humidity threshold. For this data feature type, preferably, the time period is the entire time period recorded. Preferably, the relative air humidity threshold is 60 %, 70 %, 80 %, or 90 %. At least one data feature of data feature type c.i) with one of the following sets of parameters is preferably extracted:
- relative air humidity threshold: 60 %;
- relative air humidity threshold: 70 %;
- relative air humidity threshold: 80 %; and
- relative air humidity threshold: 90 %;
wherein the time period is the entire time period recorded.

In data feature type c.ii), the one period in which the relative air humidity remained above a certain threshold for the longest time is selected and the corresponding value is used as a data feature. Again, preferably, the relative air humidity threshold is 60 %, 70 %, 80 %, or 90 %. At least one data feature of data feature type c.ii) with one of the following sets of parameters is preferably extracted:
- relative air humidity threshold: 60 %; time period: entire time period recorded;
- relative air humidity threshold: 60 %; time period: 30 days;
- relative air humidity threshold: 60 %; time period: 7 days;
- relative air humidity threshold: 70 %; time period: entire time period recorded;
- relative air humidity threshold: 70 %; time period: 30 days;
- relative air humidity threshold: 70 %; time period: 7 days;
- relative air humidity threshold: 80 %; time period: entire time period recorded;
- relative air humidity threshold: 80 %; time period: 30 days;
- relative air humidity threshold: 80 %; time period: 7 days;
- relative air humidity threshold: 90 %; time period: entire time period recorded;
- relative air humidity threshold: 90 %; time period: 30 days; and
- relative air humidity threshold: 90 %; time period: 7 days.

For example, if the relative air humidity has been above 70 % three times in the past 7 days, once for 2 h, once for 4 h and once for 7 h, the longest time period above the threshold is selected, i.e. 7 h.

Data feature types c.i) and c.ii) were selected because it was found that not only it is important that the relative air humidity exceeds a particular threshold, but even more important is how long the threshold is exceeded (c.i)) and the longest time length above the threshold (c.ii)). Mould growth is favoured if the humidity is above a certain humidity threshold for a longer period of time, while short spikes above the threshold are less problematic.

The length of time required to promote mould growth depends, among other things, on whether the enclosed space is well ventilated or not. If, for example, the cross-correlation data obtained in the first set of data features determines that the enclosed space is well ventilated, the relative humidity must remain above a threshold value for a correspondingly longer time length (e.g. above 70 % for at least 48 h). However, if the room is not well ventilated, a shorter time length is sufficient for mould to form (e.g. above 70 % for at least 12 h). This shows that the joint effect of the data feature types of the first and second set of data features provides a more meaningful result than if the individual sets of data features were considered separately.

In data feature types c.iii) and c.vi), which concern the average relative air humidity and the average air temperature, respectively, the average is preferably the arithmetic mean or the median, more preferably the mean. In combination with other data feature types, especially with the data feature types of the first set of data features, these data feature types provide a lot of information about future mould growth.

At least one data feature of data feature type c.iii) with one of the following sets of parameters is preferably extracted:
- period of the day: 00:00:00 to 23:59:59; time period: 30 days;
- period of the day: 00:00:00 to 23:59:59; time period: 7 days;
- period of the day: 06:00 to 09:00; time period: 30 days;
- period of the day: 06:00 to 09:00; time period: 7 days;
- period of the day: 09:00 to 16:00; time period: 30 days;
- period of the day: 09:00 to 16:00; time period: 7 days;
- period of the day: 16:00 to 22:00; time period: 30 days;
- period of the day: 16:00 to 22:00; time period: 7 days;
- period of the day: 22:00 to 06:00; time period: 30 days; and
- period of the day: 22:00 to 06:00; time period: 7 days.

A period of the day of 00:00:00 to 23:59:59 means a full 24 h day cycle. This means that a period of the day can also be the full 24 h period of the day.

Data feature type c.iii) helps to recognise cases in which the average relative humidity may be low, but there are certain times of day when the relative humidity is particularly high (for example, in the morning when the room is not aired after a shower).

The same sets of parameters as for data feature type c.iii) apply to data feature type c.vi).

Data feature types c.iv) and c.vii) are concerned with the standard deviation of the average relative air humidity and the average air temperature, respectively.

At least one data feature of data feature type c.iv) with one of the following sets of parameters is preferably extracted:
- period of the day: 06:00 to 09:00; time period: 30 days;
- period of the day: 06:00 to 09:00; time period: 7 days;
- period of the day: 09:00 to 16:00; time period: 30 days;
- period of the day: 09:00 to 16:00; time period: 7 days;
- period of the day: 16:00 to 22:00; time period: 30 days;
- period of the day: 16:00 to 22:00; time period: 7 days;
- period of the day: 22:00 to 06:00; time period: 30 days; and
- period of the day: 22:00 to 06:00; time period: 7 days.

The same sets of parameters as for data feature type c.iv) apply to data feature type c.vii).

In data feature types c.v) and c.viii), the differences in average relative air humidity and average air temperature, respectively, are computed between a first and a second time period.

At least one data feature of data feature type c.v) with one of the following sets of parameters is preferably extracted:
- first time period: 7 days; second time period: the 7 days before the first time period; and
- first time period: 30 days; second time period: the 30 days before the first time period;
wherein the period of the day is 00:00:00 to 23:59:59.

The same sets of parameters as for data feature type c.v) apply to data feature type c.viii).

Finally, data feature types c.ix) and c.x) are concerned with the maximum relative air humidity during a particular period of the day and the minimum air temperature during a particular period of the day, respectively.

At least one data feature of data feature type c.ix) with one of the following sets of parameters is preferably extracted:
- time period: 7 days; and
- time period: 30 days;
wherein the period of the day is 00:00:00 to 23:59:59.

Regarding data feature type c.ix) in combination with data feature type c.ii), it has been found that it is an indication of future mould growth if, for example, the relative humidity remains above a certain threshold (e.g. 80 %) for several days (e.g. 6 days) and if a maximum relative air humidity of above a certain threshold value (e.g. 90 %) is measured during this time.

The same sets of parameters as for data feature type c.ix) apply to data feature type c.x).

At least one data feature type, preferably at least 3, more preferably at least 6, even more preferably at least 8, most preferably all data feature types of step c) are employed each at least once for extracting the second set of data features.

Preferably, the list of possible data feature types for the second set of data features additionally comprises at least one of the data feature types selected from the group consisting of:
- the time length since a particular sensor was last active;
- the longest time length a particular sensor has been inactive within a time period; and
- the type of room in which a particular sensor is located, wherein the type of room is preferably selected from the group consisting of bathroom, bedroom, kitchen and lounge.

For the computational analysis carried out in step d) of the method according to the first aspect of the invention, all possible computational analyses which appear reasonable to the skilled person may be considered. In particular, the following methods of analysis may be considered:
- statistical analysis, in particular hypothesis testing, regression analysis, principal component analysis, t-Distributed Stochastic Neighbour Embedding, or any combination thereof;
- machine learning models;
- correlation and causation analysis, in particular Granger causality tests; or
- any combination thereof.

Essentially, based on the extracted data features, one or more formulas can be derived by performing a controlled study or by observing enough instances of mould and determining formulaic patterns from the data. The computational analysis can also be performed based on at least one stored lookup table, which is also known as characteristics map.

In the context of the present invention, mould has formed to a degree that is visible to the naked eye when mould colonies have formed covering an area of at least 1 mm².

In the context of the present invention, a defined time period after the last time-series sensor data point in the input dataset is preferably 1 week, 2 weeks, 3 weeks, 4 weeks, 8 weeks, or 12 weeks, more preferably 1 weeks or 2 weeks.

In the context of the present invention, the term "or" is to be understood as an exclusionary disjunction. "A or B" states that exactly one of the two statements is true (if the disjunction is true).

The determined probability indicates how likely mould growth is in the enclosed space after the defined time period has expired. The method according to the first aspect of the invention allows predictions to be made about future mould growth before the mould is visible to the eye. Based on these predictions, actions can be taken to stop, prevent and/or reduce mould growth. On the one hand, these actions can be chemical interventions to remove any invisible mould colonies that may already be present; on the other hand, measures can also be taken to change the indoor climate (temperature, humidity, condensation), for example by improving ventilation, adjusting the heating or eliminating sources of moisture.

As described above for the individual data feature types, it has been shown that the combination of data features based on cross-correlation data between air temperature and relative humidity (first set of data features) with the data features of the second set of data features has a strong positive influence on the predictive capabilities with regard to future mould growth (see the description to data feature types c.i) and c.ii), for example). The combination of data feature types within a set of data features also provides valuable information for such predictions (see the description to data feature type c.ix), for example).

As described in the introductory paragraphs, the predictions of prior art methods are often based on certain values (e.g. humidity) exceeding a certain threshold (e.g. DE 102014107690 A1, SENSORIT GMBH, 3 December 2015). However, such methods are correspondingly inaccurate as they do not consider the interrelationships between the individual factors as in the present invention. The cross-correlation between the relative humidity and the air temperature is also not considered, which has proved to be particularly advantageous for the present invention. The method according to the invention leads to fewer false positive alerts and is therefore less susceptible to alert fatigue, whereby the user would stop paying attention to the alerts.

Additionally, if only the exceeding of certain humidity thresholds alone were observed, it would at most be possible to determine that mould is present when it has already grown. In such cases, precautionary measures are no longer possible and the best that could be done is to try to stop the mould growth.

In addition, it was found that sensor placement plays a subordinate role in the method according to the first aspect of the invention compared to the methods of the prior art (e.g. WO 21233957 A1, AMBISENSE LTD, 25 November 2021).

The problem of providing an improved method for preventing (or at least reducing the risk of) future mould growth is thus solved by the method of the first aspect of the invention.

In a preferred embodiment of the first aspect of the invention, the method comprises, after step d) and before step e), a further step of assigning a label to the input dataset indicating whether mould will form to a degree that is visible to the naked eye in the enclosed space, preferably in the room of the building, using a predefined mould threshold. The output dataset in step e) additionally comprises the assigned label.

The label allows a binary statement to be made as to whether mould will form in the defined time period or not. The threshold can be derived experimentally, for example. The threshold can be a static threshold or a dynamic threshold, which can be adjusted based on the outside temperature and humidity, for example.

In another preferred embodiment of the first aspect of the invention, mould is deemed visible to the naked eye when mould colonies cover an area of at least 1 mm².

In a further preferred embodiment of the first aspect of the invention, the method comprises an additional step of reducing, in particular preventing, mould growth. This can be done by notifying a user of the determined probability. In addition or as an alternative to notifying the user, a user is prompted to take measures to reduce, in particular to prevent, mould growth. The one or both of these steps are only taken if the determined probability exceeds a predefined mould threshold.

Measures to be taken include improving ventilation, adjusting the heating and eliminating sources of moisture. On the one hand, these measures can be chemical interventions to remove any invisible mould colonies that may already be present; on the other hand, measures can also be taken to change the indoor climate (temperature, humidity, condensation), for example by improving ventilation, adjusting the heating or eliminating sources of moisture.

In another preferred embodiment of the first aspect of the invention, the method comprises an additional step of reducing, in particular preventing, mould growth by sending instructions to a building management system to take measures to reduce, in particular to prevent, mould growth by adjusting the air temperature and/or the relative air humidity of the enclosed space, preferably the room of the building, in such a way that the probability that mould will form to a degree that is visible to the naked eye decreases. This step is only taken if the determined probability exceeds a predefined mould threshold.

The instructions can be sent by a wired or wireless data connection between a system that executes the method according to the invention and the building management system.

In a preferred embodiment of any one of the previous two preferred embodiments, the method according to the first aspect of the invention is reiterated after a period of time, preferably after one week, after two weeks, after three weeks, or after four weeks, more preferably after one week.

This makes it possible to check whether the measures taken have created worse conditions for mould growth or whether further measures need to be taken.

A second aspect of the invention relates to a computer-implemented method for determining at least one cause of mould growth in an enclosed space, preferably in a room of a building, with existing or expected visible mould infestation. The method comprises the following steps.
a) Receiving an input dataset comprising time-series sensor data points of the air temperature and the relative air humidity of the enclosed space, preferably the room of the building.
b) Extracting a first set of data features from the input dataset. Each data feature is of any of the following data feature types:
   i. the cross-correlation value between the air temperature and the relative air humidity at a specific time offset of a time period;
   ii. the maximum cross-correlation value from a multitude of cross-correlation values between the air temperature and the relative air humidity of a time period, wherein each cross-correlation value in the multitude corresponds to a different time offset;
   iii. the maximum cross-correlation value from a multitude of cross-correlation values between the air temperature and the relative air humidity at a specific time offset of a time period, wherein each cross-correlation value in the multitude corresponds to a different period of the day;
   iv. the minimum cross-correlation value from a multitude of cross-correlation values between the air temperature and the relative air humidity at a specific time offset of a time period, wherein each cross-correlation value in the multitude corresponds to a different period of the day;
   v. the time length with a negative cross-correlation value below a predefined negative cross-correlation threshold between the air temperature and the relative air humidity at a specific time offset within a time period.
c) Extracting a second set of data features from the input dataset. Each data feature is of any of the following data feature types:
   i. the total time length during which the relative air humidity is above a predefined relative air humidity threshold within a time period;
   ii. the longest time length during which the relative air humidity is above a predefined relative air humidity threshold within a time period;
   iii. the average relative air humidity during a particular period of the day within a time period;
   iv. the standard deviation of the average relative air humidity during a particular period of the day within a time period;
   v. the difference between the average relative air humidity during a particular period of the day within a first time period and the average relative air humidity during a particular period of the day within a second time period;
   vi. the average air temperature during a particular period of the day within a time period;
   vii. the standard deviation of the average air temperature during a particular period of the day within a time period;
   viii. the difference between the average air temperature during a particular period of the day within a first time period and the average air temperature during a particular period of the day within a second time period;
   ix. the maximum relative air humidity during a particular period of the day within a time period; and
   x. the minimum air temperature during a particular period of the day within a time period.
d) Performing computational analysis on the first and second set of extracted data features to determine a probability for at least one mould growth cause that the mould (1) growth occurred or is expected to occur due to excessive occurrence of that mould growth cause. The at least one mould growth cause is selected from the group consisting of:
   i. liquid water exposure, preferably liquid water exposure due to a water leak, poor drainage, flooding, spills, damp materials, wet plants, aquariums, rising damp, or a combination thereof;
   ii. gaseous water and/or water vapour exposure, preferably gaseous water and/or water vapour exposure due to humidifiers, human activity, cooking, bathing, or a combination thereof;
   iii. insufficient ventilation, preferably insufficient ventilation due to an insufficient window ventilation schedule, blocked air vents, inadequate exhaust fans, insufficient air conditioning, or a combination thereof;
   iv. unfavourable temperature conditions, preferably unfavourable temperature conditions due to excessive heating, insufficient heating, inadequate insulation or a combination thereof; and
   v. lack of light, preferably lack of sunlight.
e) Producing an output dataset comprising the determined probability or probabilities.

Damp materials can be wet laundry, for example.

Rising damp occurs when moisture is drawn up from the ground by the building materials.

In the context of the present invention, human activity is the presence of humans in the enclosed space, preferably the room of the building.

Unfavourable temperature conditions and unfavourable building materials are to be understood as unfavourable in the sense that they can promote mould growth.

The data feature types of the second aspect of the invention correspond to those of the first aspect of the invention. The descriptions of the respective data feature types of the first aspect of the invention apply equally here. Likewise, the same preferred sets of parameters apply to the data features. The same applies to the computational analysis of the extracted data features.

The method makes it possible to make a statement for the individual possible mould growth causes as to whether or not they may have contributed to mould growth. For example, based on the data feature types according to the invention, the method can determine whether there are any sources of moisture present and it can identify the state of ventilation.

The method is capable of differentiating between different types of mould growth causes. As described earlier, a strong positive cross-correlation between the relative air humidity and the air temperature indicates poor ventilation and liquid water exposure. A cross-correlation value close to zero is indicative for good ventilation. And a strong negative cross-correlation value, for example when a decrease in temperature is often followed by a humidity increase, indicates that there is poor ventilation.

For example, data feature type c.iii) can be used to determine whether showering in the morning and the subsequent lack of ventilation may be a (contributory) cause if the average air humidity is comparatively higher in the morning than during the rest of the day.

The combination of the individual data feature types, in particular data feature types of the first and second sets of data features, also plays a decisive role in the second aspect of the invention.

By way of example, the method of the second aspect of the invention is capable of differentiating between wet materials (such as wet laundry hung up to dry in the enclosed space) and rising damp. Both mould growth causes lead to a positive cross-correlation between the air temperature and the relative air humidity, but with a different time period. Wet materials such as wet laundry tend to have a very high cross-correlation value for a shorter time period. Rising damp is expected to have a comparatively slightly lower cross-correlation value, but for a longer time period. For example, using data feature type b.iv), the difference in the cross-correlation value between different periods of the day (e.g. daytime and nighttime) are determined, and these values can be examined in conjunction with data feature type b.i), from which the cross-correlation values over prolonged periods of time (e.g. 7 days or 30 days) are obtained.

Similarly, a distinction can be made, for example, as to whether poor ventilation is caused by an insufficient window ventilation schedule or by malfunctioning air vents. A strongly negative cross-correlation value indicates poor ventilation. If one then considers other data feature types that include different times of day and recognises that the ventilation is good during the day (due to frequent opening of the windows) and not good at night, one can conclude that malfunctioning air vents are the cause, for example.

Unfavourable temperature conditions, poor insulation and excessive heating lead to data being measured with a strongly negative cross-correlation and very high temperatures being recorded during the day.

Also, the lack of light that can possibly be detrimental for mould growth will be reflected in the daytime-dependent cross-correlation values.

Once the most likely causes of mould have been identified by the method according to the invention, appropriate measures can be taken to eliminate the corresponding causes. Thus, the second aspect of the invention also solves the problem of providing an improved method which prevents (or at least reduces the risk of) future mould growth.

In a preferred embodiment of the second aspect of the invention, the method comprises, after step d) and before step e), for each of the at least one mould growth cause, a further step of assigning a label to the input dataset indicating whether the respective mould growth cause is actually responsible or actually partly responsible for the mould growth, using a predefined mould cause threshold. The output dataset in step e) additionally comprises the assigned label(s).

The mould growth thresholds for the individual mould growth causes can be determined experimentally, for example.

In another preferred embodiment of the second aspect of the invention, the visible mould infestation is defined as the presence of mould colonies covering an area of at least 1 mm².

In a preferred embodiment of any one of the first and the second aspect of the invention, the performing the computational analysis on the extracted data features comprises applying a trained machine-learning model on the extracted data features.

It was found that the extracted data features are particularly well suited to be analysed using a trained machine-learning model.

Preferably, the machine-learning model from the previous preferred embodiment is trained using a supervised learning algorithm. Preferably, the supervised learning algorithm is at least one of
- an ensemble learning algorithm, preferably at least one of
   - a boosting algorithm, preferably a gradient boosting algorithm; and
   - a random forest algorithm; and
- a neural network algorithm.

Gradient boosting algorithms is especially preferable because it is suitable processing data that originates from sources with non-linear interactions between different variables. Each enclosed space differs from other enclosed spaces and they are thus exposed to different variables from each other. A gradient boosting algorithm can handle different environments particularly well.

In a preferred embodiment of any one of the first and the second aspect of the invention, wherein performing the computational analysis on the extracted data features comprises applying a weighted average formula on the extracted data features.

A formula could be derived, for instance, by performing a controlled study and determining formulaic patterns from the data. Using methods, such as statistical methods, as described above, data can be fitted to arrive at a formula.

A third aspect of the invention relates to a data processing system comprising means for carrying out the method of any one of the first and second aspect of the invention.

A fourth aspect of the invention relates to a computer program comprising instructions which, when the program is executed by a computer, cause the computer to carry out the method of any one of the first and second aspect of the invention.

A fifth aspect of the invention relates to a computer-readable medium comprising instructions which, when executed by a computer, cause the computer to carry out the method of any one of the first and second aspect of the invention.

The invention will now be described by way of more specific embodiments. These embodiments are not intended to limit the gist of the invention in any way, but rather serve to ease understanding of the invention.
- Fig. 1:: simplified flow diagrams of the principal steps of (A) the method for predicting mould growth and (B) the method for determining at least one cause of mould;
- Fig. 2:: exemplary illustration of an enclosed space before and after mould formation to a degree that is visible to the naked eye;
- Fig. 3:: A: normalised time-series data of the air temperature and relative air humidity with a strong negative crosscorrelation around zero time offset; B: crosscorrelation values at different time offsets;
- Fig. 4:: A: normalised time-series data of the air temperature and relative air humidity with a slightly positive cross-correlation around zero time offset; B: crosscorrelation values at different time offsets; and
- Fig. 5:: A: normalised time-series data of the air temperature and relative air humidity with no significant crosscorrelation; B: cross-correlation values at different time offsets.

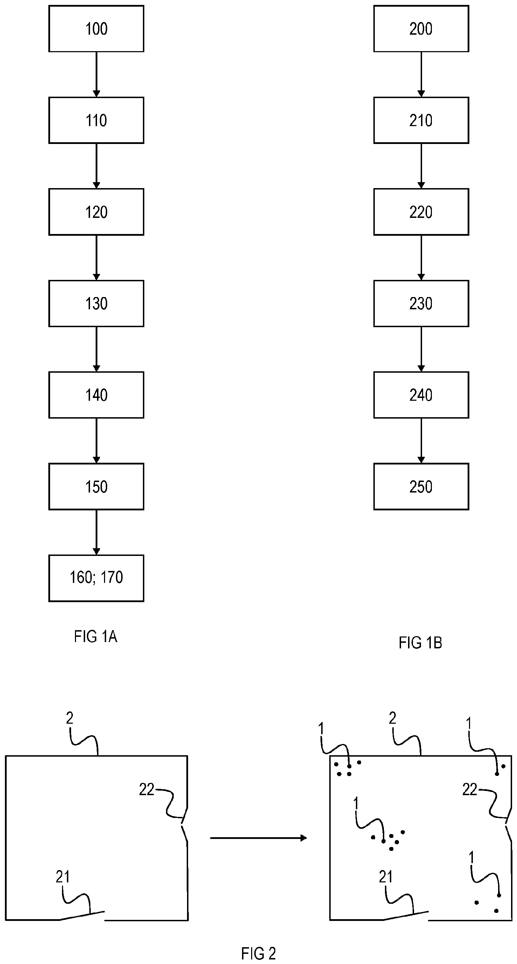

Figure 1A shows a diagram for the method for predicting mould (1) growth in an enclosed space (2), which in this example is a room of a building. This method corresponds to the first aspect of the invention. First, an input dataset comprising time-series sensor data points of the air temperature (3) and the relative air humidity (4) is received (100). The data were recorded in the room with an air temperature (3) sensor and a relative air humidity (4) sensor located in the room. The optimal sensor placement was described in more detail above. From the input dataset, a first set of data features is extracted (110). All data features from the first set of data features are related to the cross-correlation between the air temperature (3) and the relative air humidity (4). A second set of data features is extracted (120) featuring data features that are not related to the cross-correlation between the air temperature (3) and the relative air humidity (4). After extracting (110 & 120) the data features, a computational analysis is performed (130) on them to obtain a probability that mould (1) will form to a degree that is visible to the naked eye in the room within two weeks after the last data point in the input dataset. For the computational analysis, a trained machine-learning model using a gradient boosting algorithm is used. A label is assigned (140) to the input dataset indicating that mould (1) will form because the probability exceeds a predefined mould threshold. The probability and the label assigned is part of the output dataset produced (150). Because the label indicates a high likelihood that mould (1) will form, a user is notified and prompted to take measures by changing the environment to reduce (160) or even prevent mould (1) growth. Alternatively or additionally, the mould (1) growth can be reduced (170) or even prevented by sending instructions to a building management system that automatically changes, e.g. the room temperature and/or the ventilation to reduce humidity.

Figure 1B shows the computer-implemented method for determining at least one cause of mould (1) growth in an enclosed space (2), which again is a room of a building in the present example. This method corresponds to the second aspect of the invention. The steps "receiving (200) of the input dataset", "extracting (210) of the first set of data features" and "extracting (220) of the second set of data features" correspond to the respective steps (100, 110, 120) from the first aspect of the invention. Possibly, but not necessarily, the same data features are used for both aspects of the invention. Again, computational analysis is performed (230) on the first and second set of extracted data features using a trained machine-learning model. However, in this case, the analysis is done to determine a probability for at least one mould (1) growth cause (e.g. rising damp, damp materials, and blocked air vents) that the mould (1) growth occurred or is expected to occur due to excessive occurrence of that mould (1) growth cause. A label is assigned to each mould (1) growth cause indicating whether that mould (1) growth cause is likely responsible or partially responsible for the mould (1) growth. The labels are assigned using predefined mould (1) cause thresholds that are different for each mould (1) growth cause.

The probability/probabilities and the label(s) are part of the output dataset produced (250).

The method shown in Figure 1B (the second aspect of the invention) serves on the one hand to determine the cause of mould infestation already present in the room. In combination with the first aspect of the invention (Figure 1A), the reasons for the probable future mould infestation can also be determined as a precautionary measure and thus future mould infestation can be prevented (or at least the risk of future mould infestation can be reduced).

Figure 2 illustrates the top-down view of an enclosed space (2) in which mould (1) can form under the necessary conditions. The room comprises a door (21) and a window (22) that both can be opened and closed. In the illustration on the left, no mould (1) colonies visible to the naked eye have yet formed; in the illustration on the right, mould (1) colonies are visible to the naked eye and cover an area of at least 1 mm².

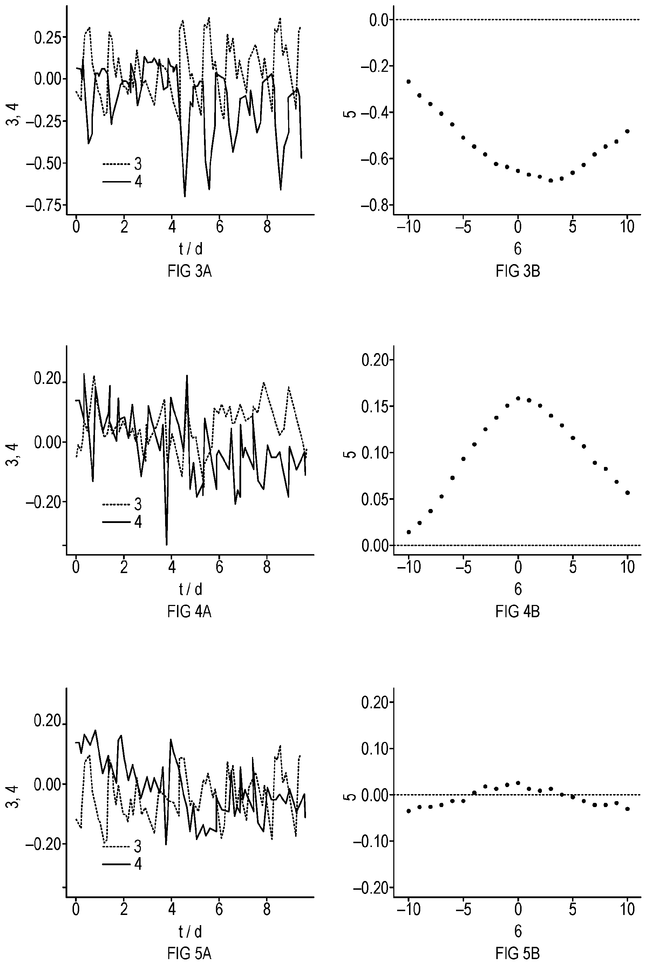

Figures 3A, 4A and 5A show normalised time-series sensor data of the air temperature (3) and the relative air humidity (4) with different degrees of cross-correlation values (5) between the air temperature (3) and the relative air humidity (4). Figures 3B, 4B and 5B show the corresponding cross-correlation values (5) at time offsets (6) between -10 and 10. The time unit of the time offset is 10 min.

In Figure 3A, there is a strong negative cross-correlation between the air temperature (3) and the relative air humidity (4). More precisely, the relative air humidity (4) changes with a delay of around 30 minutes in an inverse relationship to the air temperature (3). This indicates that the room is poorly ventilated, as if the absolute air humidity remains constant, the relative air humidity (4) decreases as the air temperature (3) rises and vice versa. This delay is illustrated in Figure 3B, as the smallest cross-correlation value (5) occurs at a time offset (6) of 3 (i.e. 30 min).

Together with other data features, in particular with data features from the second set of data features, this allows good predictions to be made about future mould (1) growth and its cause.

Figure 4A shows data with positive cross-correlation values at time offsets (6) around zero. The values are not extraordinarily high, but still statistically significant (Figure 4B). A positive cross-correlation indicates that humidity is released into the air while the temperature rises. This is an indication that there is liquid water exposure, from which the moisture gets into the air, and that the ventilation is not good enough. Together with other data features, this can be used to predict future mould (1) growth and its cause.

Figures 5A and 5B exemplarily show time-series data where there is not a statistically significant positive or negative cross-correlation between the air temperature (3) and relative air humidity (4). As the two parameters change independently of each other, this indicates that the room is well ventilated.

### Examples 1 to 4

Time-series sensor data of the air temperature (3) and relative air humidity (4) were recorded in rooms of three different building in examples 1 to 4. The values for the extracted data features from these data are shown in Table 1.

**Table 1: Extracted data feature values for examples 1 to 3.**

| Ex. | A | B | C | D | E | F | G | H | I | J |
|---|---|---|---|---|---|---|---|---|---|---|
| 1 | 163 | 163 | 148 | 13 | 86.83 | 87.41 | 93 | 0.38 | -0.37 | 0.89 |
| 2 | 164 | 132 | 0 | 0 | 69.42 | 72.28 | 75 | 0.76 | -0.82 | 0.76 |
| 3 | 112 | 0 | 0 | 0 | 63.69 | 63.33 | 70 | -0.90 | -0.94 | 0.71 |
| 4 | 143 | 12 | - | - | - | - | - | - | -1.00 | -0.73 |

The data features in Table 1 are:
A: the longest time length in hours during which the relative air humidity (4) is above a relative air humidity threshold of 60 % within the last 7 days (data feature type c.ii));
B: the longest time length in hours during which the relative air humidity (4) is above a relative air humidity threshold of 70 % within the last 7 days (data feature type c.ii));
C: the longest time length in hours during which the relative air humidity (4) is above a relative air humidity threshold of 80 % within the last 7 days (data feature type c.ii));
D: the longest time length in hours during which the relative air humidity (4) is above a relative air humidity threshold of 90 % within the last 7 days (data feature type c.ii));
E: the average relative air humidity (4) in % during the entire period of the day within the last 30 days (data feature type c.iii));
F: the average relative air humidity (4) in % during the entire period of the day within the last 7 days (data feature type c.iii));
G: the maximum relative air humidity (4) in % during the entire period of the day within the last 7 days (data feature type c.ix));
H: the maximum cross-correlation value (5) from a multitude of cross-correlation values (5) between the air temperature (3) and the relative air humidity (4) within the last 7 days; the multitude includes every value corresponding to all integer time offsets ranging from -10 to 10 with 10 min as the time unit of the time offset (data feature type b.ii));
I: the minimum cross-correlation value (5) from a multitude of cross-correlation values (5) between the air temperature (3) and the relative air humidity (4) at a time offset (6) of zero within the last 7 days; each cross-correlation value (5) in the multitude corresponds to one of these periods of the day: 08:00 to 20:00 & 20:00 to 08:00 (data feature type b.iv)); and
J: the maximum cross-correlation value (5) from a multitude of cross-correlation values (5) between the air temperature (3) and the relative air humidity (4) at a time offset (6) of zero within the last 7 days; each cross-correlation value (5) in the multitude corresponds to one of these periods of the day: 08:00 to 20:00 & 20:00 to 08:00 (data feature type b.iii)).

Example 1 shows prolonged periods of high relative air humidity (4) values for prolonged periods in a row (data feature C: above 80 % for over 6 days in a row) and a maximum relative air humidity (4) of 93 % within the last 7 days (data feature G). This shows that it is very humid and this high humidity level could lead to mould growth within a few weeks.

In example 2, the high positive cross-correlation value (5) of 0.76 stands out (data features H and J). This suggests that a source of water (such as drying laundry) causes the relative air humidity (4) to increase whenever there is an increase in air temperature (3). Also, the room experienced an average humidity of over 72 % within the past seven days, which is high (data feature F). These conditions can lead to the spread of mould (1) within a week.

In contrast, in the room of example 3 there seems to be no source of excess moisture. There is a strong negative cross-correlation value (5) of -0.90 within the last 7 days (data feature H). Even though there does not seem to be a source of moisture, this suggests that the room is poorly ventilated. Together with a maximum relative air humidity (4) value of 70 % (data feature G), this suggests a high potential for mould growth within a week.

The strongly negative cross-correlation values (5) of -0.73 to - 1.00 in the room of example 4 suggest very bad ventilation in that room (data features I and J). For a well-ventilated room, the relative air humidity (4) would need to be above 70 % for about 48 h to lead to mould (1) growth. However, since the ventilation is bad in this example, even only 12 h above 70 % relative air humidity (4) would be a cause of concern. Since the relative air humidity (4) has been high for prolonged periods of time (data features A and B), mould growth is to be expected in this case in the near future.

## Claims

1. A computer-implemented method for predicting mould (1) growth in an enclosed space (2), preferably in a room of a building, the method comprising the steps:
a) receiving (100) an input dataset comprising time-series sensor data points of the air temperature (3) and the relative air humidity (4) of the enclosed space (2), preferably the room of the building;
b) extracting (110) a first set of data features from the input dataset, wherein each data feature is of any of the following data feature types:
i. the cross-correlation value (5) between the air temperature (3) and the relative air humidity (4) at a specific time offset (6) of a time period;
ii. the maximum cross-correlation value (5) from a multitude of cross-correlation values (5) between the air temperature (3) and the relative air humidity (4) of a time period, wherein each cross-correlation value (5) in the multitude corresponds to a different time offset (6);
iii. the maximum cross-correlation value (5) from a multitude of cross-correlation values (5) between the air temperature (3) and the relative air humidity (4) at a specific time offset (6) of a time period, wherein each cross-correlation value (5) in the multitude corresponds to a different period of the day;
iv. the minimum cross-correlation value (5) from a multitude of cross-correlation values (5) between the air temperature (3) and the relative air humidity (4) at a specific time offset (6) of a time period, wherein each cross-correlation value (5) in the multitude corresponds to a different period of the day; and
v. the time length with a negative cross-correlation value (5) below a predefined negative cross-correlation threshold between the air temperature (3) and the relative air humidity (4) at a specific time offset (6) within a time period;
c) extracting (120) a second set of data features from the input dataset, wherein each data feature is of any of the following data feature types:
i. the total time length during which the relative air humidity (4) is above a predefined relative air humidity threshold within a time period;
ii. the longest time length during which the relative air humidity (4) is above a predefined relative air humidity threshold within a time period;
iii. the average relative air humidity (4) during a particular period of the day within a time period;
iv. the standard deviation of the average relative air humidity (4) during a particular period of the day within a time period;
v. the difference between the average relative air humidity (4) during a particular period of the day within a first time period and the average relative air humidity (4) during a particular period of the day within a second time period;
vi. the average air temperature (3) during a particular period of the day within a time period;
vii. the standard deviation of the average air temperature (3) during a particular period of the day within a time period;
viii. the difference between the average air temperature (3) during a particular period of the day within a first time period and the average air temperature (3) during a particular period of the day within a second time period;
ix. the maximum relative air humidity (4) during a particular period of the day within a time period; and
x. the minimum air temperature (3) during a particular period of the day within a time period;
d) performing (130) computational analysis on the first and second set of extracted data features to determine a probability that mould (1) will form to a degree that is visible to the naked eye in the enclosed space (2), preferably in the room of the building, within a defined time period after the last time-series sensor data point in the input dataset; and
e) producing (150) an output dataset comprising the determined probability.

2. The method of claim 1, wherein
- the method comprises, after step d) and before step e), a further step of assigning (140) a label to the input dataset indicating whether mould (1) will form to a degree that is visible to the naked eye in the enclosed space (2), preferably in the room of the building, using a predefined mould threshold; and
- the output dataset in step e) additionally comprises the assigned label.

3. The method of any one of the preceding claims, wherein mould (1) is deemed visible to the naked eye when mould (1) colonies cover an area of at least 1 mm².

4. The method of any one of the preceding claims, comprising an additional step of reducing (160), in particular preventing, mould (1) growth by
- notifying a user of the determined probability, and/or
- prompting a user to take measures to reduce, in particular to prevent, mould (1) growth;
if the determined probability exceeds a predefined mould (1) threshold.

5. The method of any one of the preceding claims, comprising an additional step of reducing (170), in particular preventing, mould (1) growth by
- sending instructions to a building management system to take measures to reduce, in particular to prevent, mould (1) growth by adjusting the air temperature (3) and/or the relative air humidity (4) of the enclosed space (2), preferably the room of the building, in such a way that the probability that mould (1) will form to a degree that is visible to the naked eye decreases;
if the determined probability exceeds a predefined mould (1) threshold.

6. The method of any one of claims 4 to 5, wherein after a period of time, preferably after one week, after two weeks, after three weeks, or after four weeks, more preferably after one week, the method of any one of claims 1 to 5 is reiterated.

7. A computer-implemented method for determining at least one cause of mould (1) growth in an enclosed space (2), preferably in a room of a building, with existing or expected visible mould (1) infestation, the method comprising the steps:
a) receiving (200) an input dataset comprising time-series sensor data points of the air temperature (3) and the relative air humidity (4) of the enclosed space (2), preferably the room of the building;
b) extracting (210) a first set of data features from the input dataset, wherein each data feature is of any of the following data feature types:
i. the cross-correlation value (5) between the air temperature (3) and the relative air humidity (4) at a specific time offset (6) of a time period;
ii. the maximum cross-correlation value (5) from a multitude of cross-correlation values (5) between the air temperature (3) and the relative air humidity (4) of a time period, wherein each cross-correlation value (5) in the multitude corresponds to a different time offset (6);
iii. the maximum cross-correlation value (5) from a multitude of cross-correlation values (5) between the air temperature (3) and the relative air humidity (4) at a specific time offset (6) of a time period, wherein each cross-correlation value (5) in the multitude corresponds to a different period of the day;
iv. the minimum cross-correlation value (5) from a multitude of cross-correlation values (5) between the air temperature (3) and the relative air humidity (4) at a specific time offset (6) of a time period, wherein each cross-correlation value (5) in the multitude corresponds to a different period of the day; and
v. the time length with a negative cross-correlation value (5) below a predefined negative cross-correlation threshold between the air temperature (3) and the relative air humidity (4) at a specific time offset (6) within a time period;
c) extracting (220) a second set of data features from the input dataset, wherein each data feature is of any of the following data feature types:
i. the total time length during which the relative air humidity (4) is above a predefined relative air humidity threshold within a time period;
ii. the longest time length during which the relative air humidity (4) is above a predefined relative air humidity threshold within a time period;
iii. the average relative air humidity (4) during a particular period of the day within a time period;
iv. the standard deviation of the average relative air humidity (4) during a particular period of the day within a time period;
v. the difference between the average relative air humidity (4) during a particular period of the day within a first time period and the average relative air humidity (4) during a particular period of the day within a second time period;
vi. the average air temperature (3) during a particular period of the day within a time period;
vii. the standard deviation of the average air temperature (3) during a particular period of the day within a time period;
viii. the difference between the average air temperature (3) during a particular period of the day within a first time period and the average air temperature (3) during a particular period of the day within a second time period;
ix. the maximum relative air humidity (4) during a particular period of the day within a time period; and
x. the minimum air temperature (3) during a particular period of the day within a time period;
d) performing (230) computational analysis on the first and second set of extracted data features to determine a probability for at least one mould (1) growth cause that the mould (1) growth occurred or is expected to occur due to excessive occurrence of that mould (1) growth cause, wherein the at least one mould (1) growth cause is selected from the group consisting of:
i. liquid water exposure, preferably liquid water exposure due to a water leak, poor drainage, flooding, spills, damp materials, wet plants, aquariums, rising damp, or a combination thereof;
ii. gaseous water and/or water vapour exposure, preferably gaseous water and/or water vapour exposure due to humidifiers, human activity, cooking, bathing, or a combination thereof;
iii.insufficient ventilation, preferably insufficient ventilation due to an insufficient window ventilation schedule, blocked air vents, inadequate exhaust fans, insufficient air conditioning, or a combination thereof;
iv. unfavourable temperature conditions, preferably unfavourable temperature conditions due to excessive heating, insufficient heating, inadequate insulation, or a combination thereof; and
v. lack of light, preferably lack of sunlight; and
e) producing (250) an output dataset comprising the determined probability or probabilities.

8. The method of claim 7, wherein
- the method comprises, after step i and before step e), for each of the at least one mould (1) growth cause, a further step of assigning (240) a label to the input dataset indicating whether the respective mould (1) growth cause is actually responsible or actually partly responsible for the mould (1) growth, using a predefined mould (1) cause threshold; and
- the output dataset in step e) additionally comprises the assigned label(s).

9. The method of any one of claims 7 to 8, wherein the visible mould (1) infestation is defined as the presence of mould (1) colonies covering an area of at least 1 mm².

10. The method any one of the preceding claims, wherein performing (130; 230) the computational analysis on the extracted data features comprises applying a trained machine-learning model on the extracted data features.

11. The method of claim 10, wherein the machine-learning model is trained using a supervised learning algorithm, preferably at least one of
- an ensemble learning algorithm, preferably at least one of
- a boosting algorithm, preferably a gradient boosting algorithm; and
- a random forest algorithm; and
- a neural network algorithm.

12. The method of any one of the preceding claims, wherein performing (130; 230) the computational analysis on the extracted data features comprises applying a weighted average formula on the extracted data features.

13. A data processing system comprising means for carrying out the method of any one of claims 1 to 12.

14. A computer program comprising instructions which, when the program is executed by a computer, cause the computer to carry out the method of any one of claims 1 to 12.

15. A computer-readable medium comprising instructions which, when executed by a computer, cause the computer to carry out the method of any one of claims 1 to 12.
